# EUROPEAN PATENT APPLICATION

(11) **EP 4 375 503 A1**
(43) Date of publication of application: **29.05.2024**
(21) Application number: 22208825.4
(22) Date of filing: 22.11.2022
(51) Int. Cl.: F03D 13/40, F03D 13/10, F03D 80/80

(54) **NACELLE FOR A WIND TURBINE AND METHOD FOR INSTALLING THE NACELLE**

(71) Applicant: Siemens Gamesa Renewable Energy A/S, 7330 Brande (DK)
(72) Inventor: Akram, S, Vasim, 560100 Bangalore (IN)
(74) Representative: SGRE-Association

(57) **Abstract**

A nacelle (110, 200, 800, 1300) for a wind turbine (101) and methods (700, 1200, 1500) of installing the nacelle (110, 200, 800, 1300) are provided. The nacelle (110, 200, 800, 1300) comprises an upper nacelle compartment (202, 802, 1302), and a lower nacelle compartment (204, 804, 1304). In an operational state of the wind turbine (101), the lower nacelle compartment (204, 804, 1304) is attached beneath the upper nacelle compartment (202, 802, 1302). The upper nacelle compartment (202, 802, 1302) is dimensioned to accommodate at least a bearing arrangement (208) for supporting a shaft of a rotor (102) of the wind turbine (101) and an electrical generator (210). The lower nacelle compartment (204, 804, 1304) is dimensioned to accommodate at least a transformer (212) and a power converter (214).

## Description

### TECHNICAL FIELD

Various embodiments relate to a nacelle for a wind turbine, and a method for installing the nacelle.

### BACKGROUND

A wind turbine is a device that converts kinetic energy of the wind into electrical energy. The wind turbine comprises a rotor having one or more blades and a nacelle which may comprise a drive train including a bearing arrangement, an optional gear box, a generator and electrical components like a transformer and a power converter. The wind turbine further comprises a tower holding, at its top end, the nacelle. The tower of the wind turbine may be connected via a transition piece to a foundation in the ground.

In the nacelle, a front bearing, a rear bearing and further components, such as the gear box and the generator, may each be attached to a support frame called the bed frame. The bed frame is, for example, a support structure coupled to a tower mount of the nacelle. The tower mount connects the nacelle to the tower of the wind turbine to transmit loads received, for example from the bearings, to the tower. The tower mount may couple the nacelle to the tower of the wind turbine by means of a yaw bearing to orient the rotor into the wind.

A main shaft may be configured to directly connect the rotor to the generator. Alternatively, the main shaft may be configured to couple the rotor directly to the gear box, and the gear box may be coupled to the generator by means of a further shaft. The front bearing and the rear bearing both support the main shaft. The front bearing is arranged closer to the rotor than the rear bearing. The front bearing is, for example, carrying radial loads only. The rear bearing is, for example, carrying both axial and radial loads.

With the increase of the power of wind turbines, the dimensions of the components of the wind turbines increase. For example, for a wind turbine with a power of 7 to 8 Megawatts (MW), in particular the size of the drive train, transformer and power converter may increase. However, the space for accommodating these components in the nacelle may be limited. For example, when the length of the nacelle extends beyond 16 meters (m), this may raise challenges in cantilever structures and transportation. Similar considerations may apply for the width and height of the nacelle. For example, for transportation on roads, a transport vehicle has to circumvent or has to cope with all barriers like curves, tunnels, bridges, traffic lights, etc.

### SUMMARY

Therefore, there is a need for advanced nacelles for wind turbines.

This need is met by the features of the independent claims. The features of the dependent claims define embodiments.

A nacelle for a wind turbine is provided. The nacelle comprises an upper nacelle compartment and a lower nacelle compartment. In an operational state of the wind turbine, the lower nacelle compartment is attached beneath the upper nacelle compartment to the upper nacelle compartment.

The operational state may mean a state of the wind turbine in which the nacelle is attached at the top of a tower, equipped with a rotor and ready for converting kinetic wind energy in electrical energy. In this operational state, the following spatial designations will be used here: "top"/"upper" and "bottom"/"lower" refer to a vertical direction with respect to ground. The vertical direction corresponds essentially to the vertical longitudinal direction of the tower. In the operational state, the lower nacelle compartment is beneath the upper nacelle compartment, i.e., the lower nacelle compartment is closer to the ground than at the upper nacelle compartment. A height of the nacelle is a dimension of the nacelle in the vertical direction from the bottom to the top. "Front" and "rear" refer to a length direction which extends horizontally, i.e. essentially perpendicular to the vertical direction, and essentially in the length direction of a main shaft of the wind turbine to which the rotor is connected. A length of the nacelle refers to a dimension of the nacelle in the length direction. A front side of the nacelle is the side of the nacelle at which the rotor is attached. The rear side of the nacelle is opposite to the front side of the nacelle in the length direction. A "width" of the nacelle extends in a direction perpendicular to the length and height directions of the nacelle.

The upper nacelle compartment is dimensioned to accommodate at least a bearing arrangement for supporting the shaft of the rotor of the wind turbine and an electrical generator. The upper nacelle compartment may be dimensioned to accommodate further components, for example a gearbox and at least parts of a cooling system. The lower nacelle compartment is dimensioned to accommodate at least a transformer and a power converter.

The bearing arrangement may comprise bearings for supporting the shaft of the rotor, for example a rear bearing and a front bearing arranged closer to the rotor than the rear bearing. The power converter may comprise an AC-DC-AC- power converter for adapting the output frequency of the electrical energy from the electrical generator. The electrical generator may be operated at variable speed such that the output frequency of the electrical generator may vary. The power converter may adapt phase and frequency of the electrical energy to a grid phase and frequency. The transformer may be configured for adapting the output voltage of the electrical energy to a grid voltage. For example, the transformer may comprise a step-up transformer.

By using a nacelle with two floors, at least some of the components to be accommodated in the nacelle can be arranged on top of each other. For example, in the upper nacelle compartment, the mechanical components and the generator can be arranged and in the lower nacelle compartment the electrical components including the transformer and the power converter can be arranged. Thus, a length of the nacelle may be shorter compared to a nacelle in which all components are arranged in a single floor. For example, the length of the nacelle may be less than 16 m, in particular less than 14 m. As a result, the nacelle can be transported on most roads, even roads with tight curves.

In particular by arranging essentially all mechanical components in the upper nacelle compartment, no structural changes to the mechanical components are necessary. On the other hand, arranging the electrical components in the lower nacelle compartment may be easily achieved, as electrical cables and tubing for the cooling system may be easily installed across the floor boundaries if required.

According to various examples, the lower nacelle compartment is configured to accommodate the transformer in a position between a tower mount of the nacelle and the power converter. In other examples, the lower the cell compartment is configured to, accommodate the power converter in a position between the tower mount of the nacelle and the transformer. For example, depending on cooling requirements, requirements concerning a position of the electrical cables from the generator, or requirements in terms of a weight distribution, one of the above described arrangements of the transformer and the power converter may be more appropriate.

The transformer and the power converter may be both arranged within the lower nacelle compartment, for example in the operational state of the wind turbine or in a state in which the nacelle is transported.

In various examples, a width of the lower nacelle compartment is smaller than a width of the upper nacelle compartment, and a length of the lower nacelle compartment is smaller than a length of the upper nacelle compartment. As a result, the lower nacelle compartment can be arranged at least partially within the upper nacelle compartment. For example, during transportation of the nacelle, the lower nacelle compartment may be arranged within the upper nacelle compartment such that the whole nacelle can be transported with a single transport vehicle. As the lower nacelle compartment is arranged within the upper nacelle compartment, the height of the nacelle may be reduced during transportation. The transformer and the power converter may be installed in the lower nacelle compartment during transportation or lifting the nacelle to the top of the tower of the wind turbine.

For example the height of the upper nacelle compartment may be less than 4 m, for example 3.5m. The upper and lower nacelle compartment may be configured such that the lower nacelle compartment can be completely arranged within the upper nacelle compartment. As a result, the nacelle can be transported on most roads without circumventing tunnels, bridges and traffic lights.

According to various examples, a tower mount is provided at a front end of the upper nacelle compartment. A length of the lower nacelle compartment is shorter than distance between the tower mount and a rear end of upper nacelle compartment. This allows the lower nacelle compartment to be housed in and retrieved from the upper nacelle compartment while the tower mount remains accessible at all times.

The nacelle may further comprise a rear end support structure beam extending within the upper nacelle compartment from the tower mount to a rear end of the upper nacelle compartment. In the operational state of the wind turbine, the lower nacelle compartment is attached beneath the rear end support structure beam to the rear end support structure beam.

A method of installing such nacelle at a top of a tower of the wind turbine may comprise lifting the nacelle to the top of the tower of the wind turbine with the lower nacelle compartment being arranged within the upper nacelle compartment, and connecting the tower mount to the top of the tower. Then, the lower nacelle compartment may be lowered to a position beneath the upper nacelle compartment, and the lower nacelle compartment may be attached beneath the upper nacelle compartment to the upper nacelle compartment. This may reduce installation activities on the ground such that no installation space at ground may be required. For example, the nacelle may be delivered with the transport vehicle in a transportation state in which the lower nacelle compartment is arranged within the upper nacelle compartment. The nacelle can be lifted directly from the transport vehicle to the top of the tower using a crane.

According to other examples, a tower mount may be provided at a front end of the lower nacelle compartment. The upper nacelle compartment may provide a first circumferential connection structure at its lower side, and the lower nacelle compartment may provide a second circumferential connection structure at its upper side. The first circumferential connection structure and the second circumferential connection structure match each other. However, it is to be noticed that the lower nacelle compartment may still be smaller than the upper nacelle compartment. In particular, the lower nacelle compartment may have smaller length and smaller width than the upper nacelle compartment such that the lower nacelle compartment can be accommodated within the upper nacelle compartment during transportation.

A method of installing such nacelle at a top of a tower of the wind turbine may comprise raising, at the ground and from the arrangement in which the lower nacelle compartment is within the upper nacelle compartment, the upper nacelle compartment to a position above the lower nacelle compartment. Next, the lower nacelle compartment is attached beneath the upper nacelle compartment to the upper nacelle compartment, for example by means of the first and second circumferential connection structures. The nacelle is lifted to the top of a tower of the wind turbine, and the tower mount is connected to the top of the tower. As the nacelle is expanded at ground, at least some installation activities can be performed at ground, for example installation of a hydraulic group, cooler and weather station. As the lower nacelle compartment can be accommodated within the upper nacelle compartment during transportation, transportation efforts may be reduced.

According to further other examples, a width of the lower nacelle compartment is essentially the same as a width of the upper nacelle compartment and a length of the lower nacelle compartment is essentially the same as a length of the upper nacelle compartment. A tower mount may be provided at a front end of the lower nacelle compartment. Consequently, the lower and upper nacelle compartment may be transported separately such that each unit has a significantly lower weight than the nacelle as a whole. Road restrictions, for example a maximum load on a bridge, can thus be taken into account. Furthermore, each of the upper and lower nacelle compartments may be equipped by the manufacturer with at least some of the components which have to be accommodated in the nacelle for operating the nacelle, for example the transformer, the power converter, the gearbox, bearings for the rotor, a cooling system and a weather station.

A method of installing this nacelle at a top of a tower of the wind turbine may comprise positioning the upper nacelle compartment in a position above the lower nacelle compartment at the ground. Furthermore, the method may comprise attaching the lower nacelle compartment beneath the upper nacelle compartment to the upper nacelle compartment, and lifting the nacelle to the top of the tower of the wind turbine. At the top of the tower, the tower mount at the lower nacelle compartment is connected to the top of the tower. When attaching the lower nacelle compartment to the upper nacelle compartment at ground, additional components may be installed, for example a cooling system.

According to various examples, the nacelle may comprise a rear end support structure beam extending within the lower nacelle compartment from the tower mount to a rear end of the lower nacelle compartment, and at least one support beam connected to the rear end support structure beam. The at least one support beam may extend, in the operational state of the wind turbine, from the rear end support structure beam downwards. The at least one support beam may be configured to support at least one of the transformer and the power converter.

For example, two rear end support structure beams may be provided in the lower nacelle compartment. Each of the two rear end support structure beams may extend in the length direction of the nacelle. The two rear end support structure beams may extend essentially in parallel and in a horizontal direction. At each rear end support structure beam a plurality of support beams may extend in a vertical direction downwards. For example at each rear end support structure beam two support beams may be provided for supporting the power converter and at each rear end support structure beam one support beam may be provided for supporting the transformer. However, this is only an example and any other number of support beams may be provided for supporting the power converter and the transformer. Further support beams may be provided for supporting further components, for example components of a cooling system. By directly attaching at least some of the components of the nacelle, for example the transformer and the power converter, via the support beams to the rear end support structure beams, a load of these components does not need to be supported by a bottom floor construction of the lower nacelle compartment. Furthermore, structural strength may be achieved. It is to be noticed that the rear end support structure beams may also be arranged within the upper nacelle compartment and corresponding support beams may be provided for supporting components essentially arranged within the lower nacelle compartment.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

FIG. 1 schematically illustrates a wind turbine.
FIG. 2 is a schematic perspective view of a nacelle for a wind turbine according to an embodiment.
FIG. 3 is a schematic perspective view of a lower nacelle compartment of the nacelle of FIG. 2.
FIG. 4 is a schematic perspective view of the nacelle of FIG. 2 illustrating a further option for arranging the transformer and the power converter in the lower nacelle compartment.
FIG. 5 schematically illustrates the mounting of the nacelle of FIG. 2 on a top of a tower of a wind turbine.
FIG. 6 schematically illustrates a lowering of the lower nacelle compartment of the nacelle of FIG. 5.
FIG. 7 is a flowchart of a method of installing the nacelle of FIG. 2.
FIG. 8 is a schematic perspective view of an upper nacelle compartment and a lower nacelle compartment of a nacelle according to a further embodiment.
FIG. 9 schematically illustrates the positioning of the upper nacelle compartment in a position above the lower nacelle compartment of the nacelle of FIG. 8.
FIG. 10 is a schematic perspective view of the nacelle of FIG. 8 in an assembled state.
FIG. 11 is a schematic partially cut side view of the nacelle of FIG. 8 in the assembled state.
FIG. 12 is a flowchart of a method of installing the nacelle of FIG. 8.
FIG. 13 is a schematic partially cut side view of a nacelle according to a further embodiment in an assembled state.
FIG. 14 schematically illustrates raising and attaching an upper nacelle compartment in a position above a lower nacelle compartment of the nacelle of FIG. 13.
FIG. 15 is a flowchart of a method of installing the nacelle of FIG. 13.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings, which are not necessarily shown to scale. Rather, the various elements are represented such that their function and general purpose become apparent to a person skilled in the art. Any connection or coupling between devices, components, or other physical or functional units shown in the drawings or described herein may also be implemented by an indirect connection or coupling.

Various techniques described herein generally relate to nacelles for wind turbines.

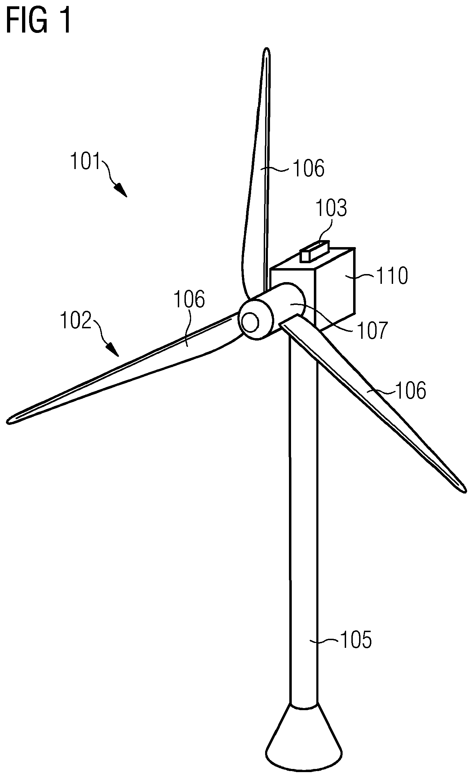

FIG. 1 schematically illustrates an exemplary wind turbine 101. The wind turbine 101 includes a rotor 102 with rotor blades 106 attached to a hub 107. Rotors 102 of this kind may have diameters ranging from, for example, 50 to 160 meters or even more. The hub 107 is connected to a nacelle 110, mounted on a tower 105. The nacelle 110 comprises a generator, coupled with the hub 107 rotating along with the blades 106. This connection can be via a shaft and gear.

The nacelle 110 is a core component for the wind turbine 101. The nacelle 110 may comprise a gearbox that is the bridge connecting the blades 106 and the generator. The generator rotor may be connected to a high-speed shaft of the gearbox. It drives the generator to rotate at a high speed and to cut the magnetic lines of force, by which electric energy is obtained. In other examples, the nacelle 110 may comprise no gearbox and the hub and the generator are coupled directly via a main shaft.

As the wind speed and direction are changing during operation of the wind turbine 101, a control system is typically installed in the nacelle 110 to adjust the operating status promptly to ensure the secure and stable operation of the wind turbine 101. Furthermore, a transformer and a power converter may be installed in the nacelle 110 to adapt the electrical energy obtained from the generator to the power grid to which the wind turbine 101 is connected.

During operation of wind turbine 101, the gearbox, the generator, the control system, the transformer and the power converter will produce heat. In order to ensure the secure and stable operation of the wind turbine 101, a radiator assembly can be thermally coupled to one or more of such heat sources to provide cooling to these heat sources. A respective cooling system may comprise a radiator assembly 103 connected with a housing of the nacelle 110. After deployment of the wind turbine 101, the radiator assembly 103 may extend away from the upper roof of the housing of the nacelle 110.

In the following, directions, positions and orientations will be used in this description as defined as follows. As shown in FIG. 1, the tower 105 extends in an essentially vertical direction with respect to ground or a foundation on which the wind turbine 101 is installed. "Up" and "down", "upper" and "lower", and "top" and "bottom" are defined with respect to this vertical direction. For example, the nacelle 110 is mounted at an upper end of the tower 105, and a lower end of the tower is attached to ground or a foundation of the wind turbine 101. "Front" and "rear" are defined with respect to an axis of rotation of the rotor 102. For example, a front side of the nacelle 110 is the side which is close to the rotor 102, and a rear side of the nacelle 110 is the side which is remote from the rotor 102. A front/rear direction extends essentially in a horizontal direction. A width direction is another horizontal direction perpendicular to the front/rear direction. For example, a size of the nacelle 110 may be in described by its height in the vertical direction, by its length in the front/rear direction, and by its width in the width direction which is perpendicular to the vertical direction and the front/rear direction.

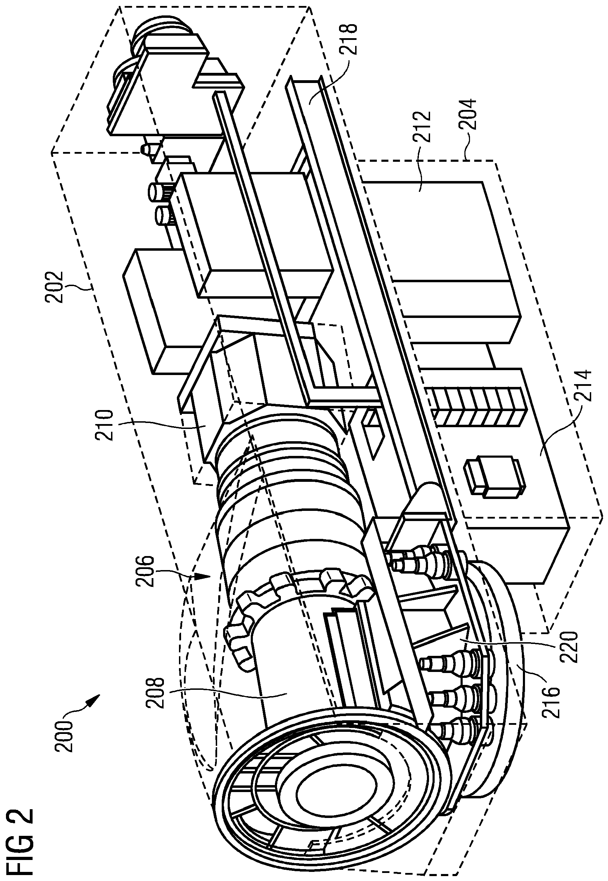

FIG. 2 shows a nacelle 200 as a first example of the nacelle 110 of FIG. 1. The nacelle 200 comprises an upper nacelle compartment 202 and a lower nacelle compartment 204. In FIG. 2, the nacelle 200 is illustrated in its operating state. The nacelle 200 provides at a lower side of the upper nacelle compartment 202 a tower mount 216 with which the nacelle 200 may be mounted at the top of the tower 105. As illustrated, the lower nacelle compartment 204 is arranged beneath the upper nacelle compartment 202. In the operating state, the upper nacelle compartment 202 accommodates a drive train 206 and further components, for example mechanical components and cooling components. The drive train 206 may comprise for example a bearing arrangement 208 and a generator 210. A bed frame 220 is provided for coupling at least parts of the drive train 206 to the tower mount 216. For example, the bed frame 220 is coupled to the tower mount 216 via bolts, and the bearing arrangement 208 is fixed at the bed frame 220. A shaft of the rotor 102 may be supported by the bearing arrangement 208 such that a rotation of the rotor 102 is transferred to the generator 210 for generating electrical energy. The drive train 206 may also comprise a gearbox between the bearing arrangement 208 and the generator 210.

At each side in the width direction of the upper nacelle compartment 202, a rear end support structure beam (RESS beam) 218 is provided in the upper nacelle compartment 202, i.e. two RESS beams may be provided. A floor of the upper nacelle compartment 202 and the lower nacelle compartment 204 may be supported via corresponding fixtures by the RESS beams 218. A front end of the RESS beams 218 may be coupled to the bed frame 220 to transfer loads and forces from the rear part of the nacelle 200 via the bed frame 220 and the tower mount 216 to the tower 105.

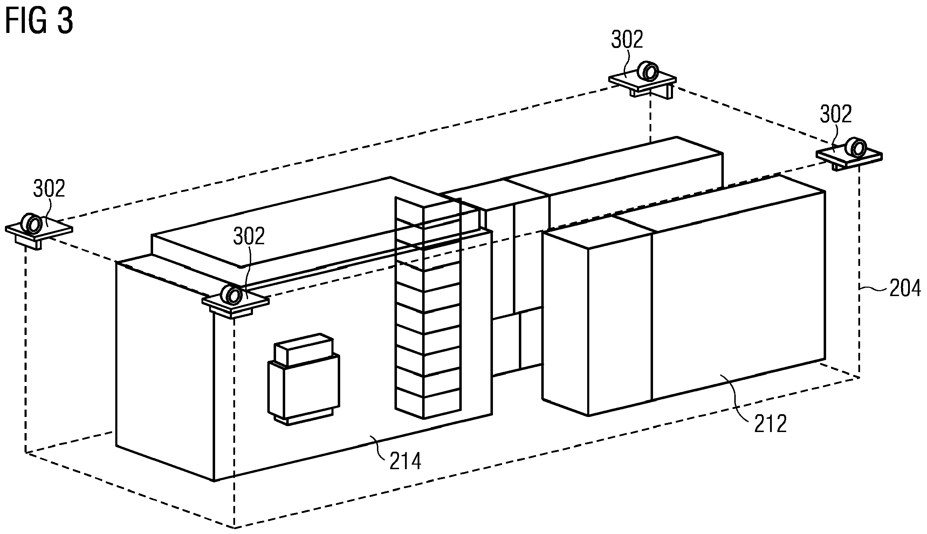

In the lower nacelle compartment 204, a transformer 212 and a power converter 214 are accommodated as shown in FIGs. 2 and 3. At the top side of the lower nacelle compartment 204 fixtures 302 may be provided for coupling the lower nacelle compartment 204 to the upper nacelle compartment 202, for example to the RESS beams 218.

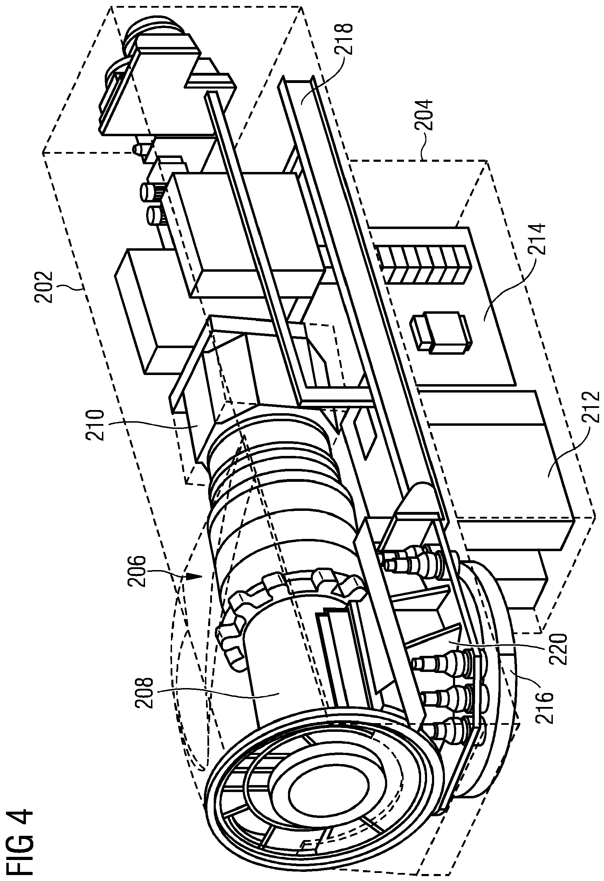

As shown in FIGs. 2 and 3, the power converter 214 may be arranged near the tower mount 216 and the transformer 212 may be arranged in the rear part of the lower nacelle compartment 204. However, as shown in FIG. 4, the positions of the power converter 214 and to the transformer to 212 may be exchanged, i.e. the transformer 212 may be arranged close to the tower mount 216 and the power converter 214 may be arranged in the rear part of the lower nacelle compartment 204.

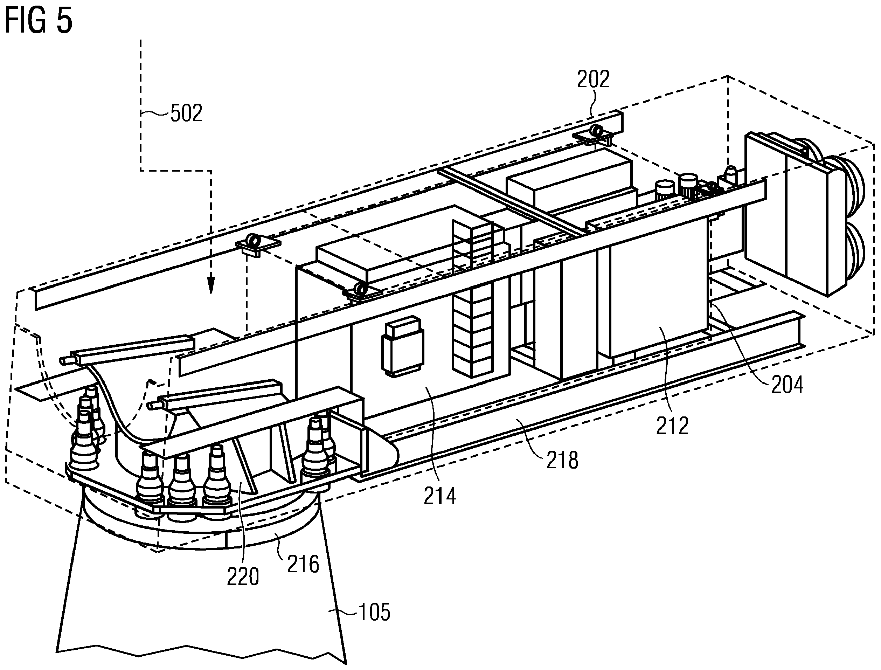

Transportation of a nacelle 200 as shown in FIGs. 2 and 4 may be difficult on usual public roads as the height of the nacelle 200 may extend beyond 4 m. The height of the nacelle 200 may be significantly larger than 4 m, for example 6 to 7 m in case of a wind turbine with an output power of 7 or 8 MW. Therefore, the length and the width of the lower nacelle compartment 204 may be smaller than the length and the width of the upper nacelle compartment 202. During transportation, the drive train 206 may not be installed within the upper nacelle compartment 202, for example to avoid overweight issues. Instead, the lower nacelle compartment 204 may be placed within the upper nacelle compartment 202 as shown in FIG. 5. The arrangement of the lower nacelle compartment 204 within the upper nacelle compartment 202 will be called in the following the "transportation state" of the nacelle 200.

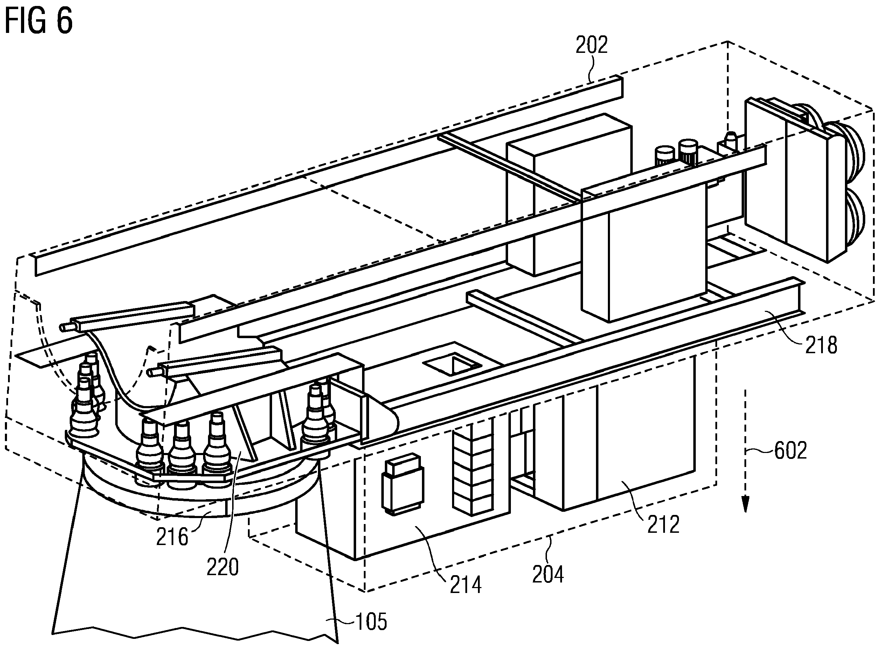

After transportation of the nacelle 200 in the transportation state to the site of the wind turbine 101, the nacelle 200 may be lifted by means of a crane on a top of the tower 105 as indicated by arrow 500 in FIG. 5. After fixing the tower mount 216 to the top of the tower 105, the lower nacelle compartment 204 may be lowered from the upper nacelle compartment 202 as indicated by arrow 600 to in FIG. 6. When the lower nacelle compartment 204 reaches a position beneath the upper nacelle compartment 202, the lower nacelle compartment 204 is fixed to the lower side of the upper nacelle compartment 202, for example to the RESS beams 218.

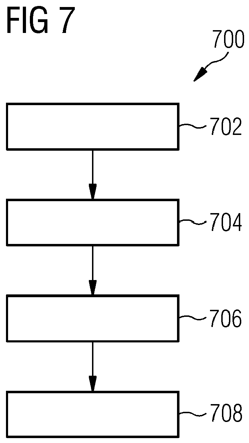

FIG. 7 shows method steps of a method 700 which summarizes the installation of the nacelle 200 at the top of the tower 105. In step 702 the nacelle 200 is lifted to the top of the tower 105 of the wind turbine 101 in the transportation state, i.e. the lower nacelle compartment 204 is arranged within the upper nacelle compartment 202. In step 704, the tower mount 216 at the front end of the upper nacelle compartment 202 is connected to the top of the tower 105. In step 706 the lower nacelle compartment 204 is lowered from the inside of the upper nacelle compartment 202 to a position beneath the upper nacelle compartment 202. In this lowered position, the lower nacelle compartment 202 is connected in step 708 to the upper nacelle compartment 202.

The nacelle 200 has, in its transportation state, compact dimensions such that it can be transported on usual public roads. The dimensions of the nacelle 200 in its transportation state correspond essentially to the dimensions of the upper nacelle compartment 202. For example, in the transportation state, the nacelle 200 with an output power of 7 to 8 MW may have a length of less than 18 m, for example 16.3 m, a height of less than 4 m, for example 3.5 m, and a width of less than 5 m, for example 4.2 m.

The lower nacelle compartment 204 may have total length of about 8 m, a total width of about 3.2 m and a total height of about 3 m. Thus, the lower nacelle compartment 204 may be easily accommodated within the upper nacelle compartment 202 for transportation.

In the operational state, i.e. when the lower nacelle compartment 204 is arranged beneath the upper nacelle compartment 202, the compact length dimension of less than 18 m will have a moderate effect on a bending moment in the RESS beams, loads on the tower mount and shifts on the center of gravity.

The two rooms, one in the upper nacelle compartment 202 and one in the lower nacelle compartment 204, provide space for all mechanical and electrical components. For example, the mechanical components may be essentially arranged in the upper nacelle compartment 202 and the electrical components may be essentially arranged in the lower nacelle compartment 204 such that a separation of mechanical and electrical components can be achieved. While the width and the length of the nacelle 200 in the operational state correspond essentially to the width and length of the nacelle in the transportation state, the height will be significantly larger in the operational state, for example 6.5 m.

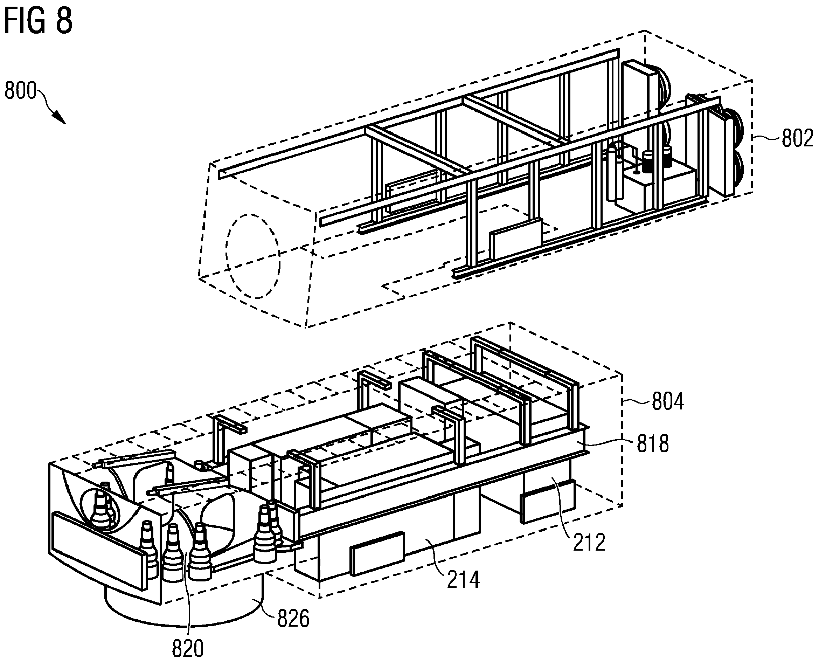

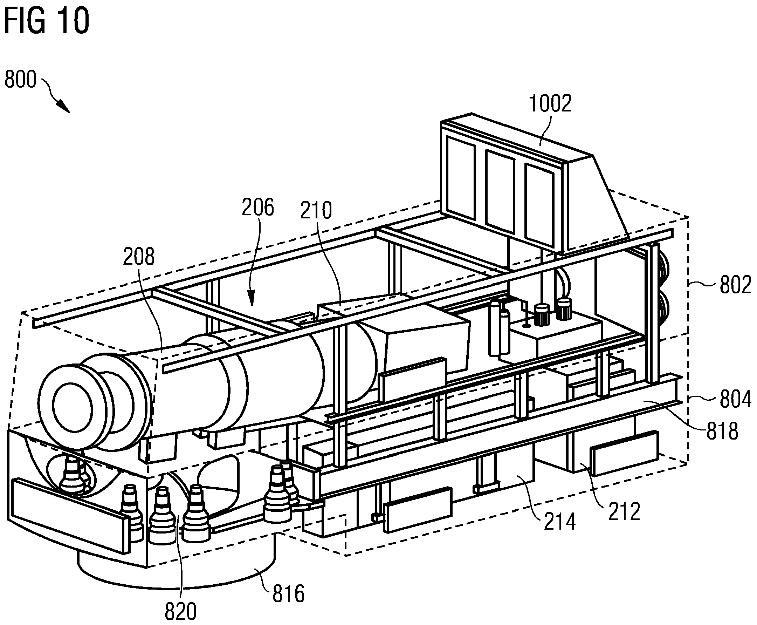

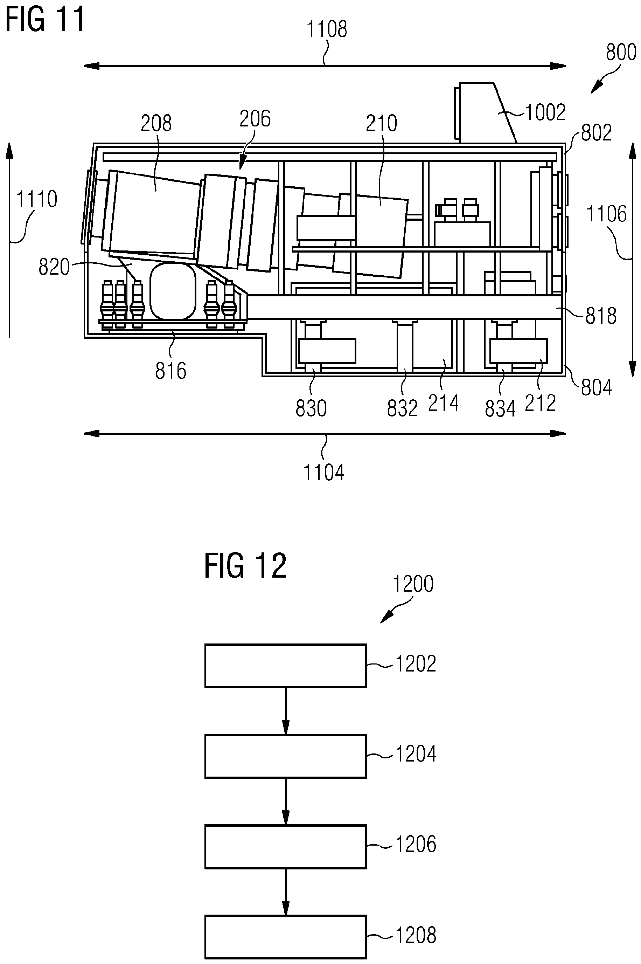

FIG. 8 shows a nacelle 800 as a second example of the nacelle 110 of FIG. 1. The nacelle 800 comprises an upper nacelle compartment 802 and a lower nacelle compartment 804. The upper nacelle compartment 802 and the lower nacelle compartment 804 may be transported separately. The upper nacelle compartment 802 may be configured to receive a drive train 206 and further mechanical components as will be described later in connection with FIGs. 10 and 11. The lower nacelle compartment 804 may be equipped with a transformer 212 and a power converter 214 and further electrical components.

At the front end of the lower nacelle compartment 804, a tower mount 826 is provided for coupling the lower nacelle compartment 804 to a top of the tower 105 of the wind turbine 101. A bed frame 820 is provided for coupling at least parts of the drive train 206 to the tower mount 816. For example, the bed frame 820 is coupled to the tower mount 816 via bolts, and a bearing arrangement 208 may be fixed at the bed frame 820. Within the lower nacelle compartment 804, at least one rear end support structure beam (RESS beam) 818 may be provided in the length direction. For example, two RESS beams may be provided in parallel and spaced apart from each other in the width direction of the lower nacelle compartment 804. Each of the RESS beams may extend in the length direction of the lower nacelle compartment 804 from the tower mount 826 to the rear side of the lower nacelle compartment 804. The front ends of RESS beams 818 may be fixed at the bed frame 820.

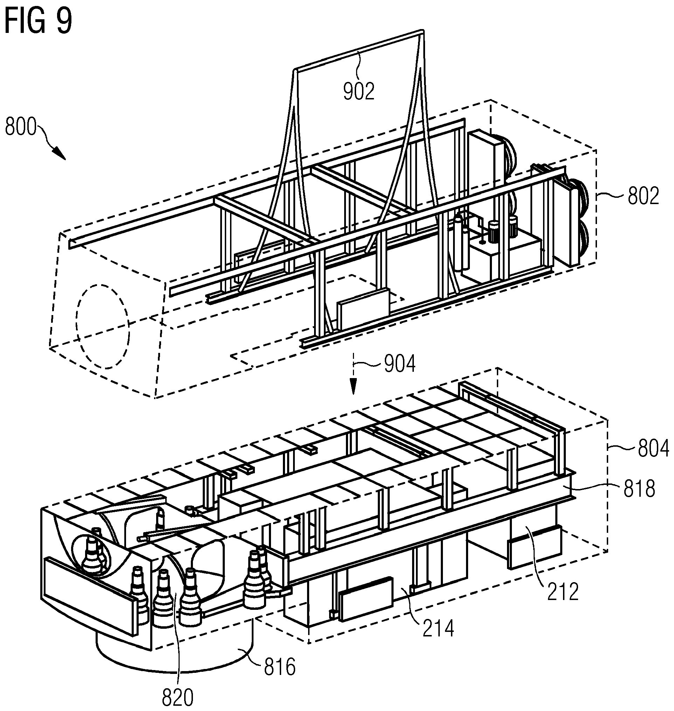

At a construction site of the wind turbine 101, the nacelle 800 may be assembled. For example, as shown in FIG. 9, at the ground, the upper nacelle compartment 802 may be placed by means of a crane (FIG. 9 shows only the fastening cables 902 of the crane) on top of the lower nacelle compartment 804 as indicated by arrow 904. After the upper nacelle compartment 802 and the lower nacelle compartment 804 are fixed to each other, further components of the wind turbine 101 may be installed as shown in FIG. 10, for example the drive train 206 and a cooling unit 1002. Further installations within the nacelle 800 may be performed, for example connecting the cooling unit to the generator 210, the transformer 212, the power converter 214 and further components to be cooled.

FIG 11 illustrates a side view of the nacelle 800 in the assembled state. In particular, FIG. 11 shows details concerning an RESS beam 818 and a bed frame 820 as well as the dimensions of the nacelle 800.

The RESS beam 818 is fixed at the bed frame 820 and extends from the tower mount 816 in the rear direction of the nacelle 800. A second RESS beam, which is not visible in this sectional side view, extends in parallel from the tower mount 816 in the rear direction and is spaced apart from the visible RESS beam 816 in the width direction of the nacelle 800. Along the RESS beam 818, three support beams 830, 832 and 834 are fixed to the RESS beam 818 and extend each downward. The support beams 830 and 832 are coupled to and support the power converter 214, and the support beam 834 is coupled to and supports the transformer 212. At the not visible second RESS beam corresponding support beams may be provided for coupling and supporting the power converter 214 and the transformer 212 at the opposite sides. At the tower mount 816, the bed frame 820 is fixed with a plurality of bolts and the bearing arrangement 208 of the drive train 206 is mounted at the bed frame 820.

The nacelle 800 may be used in connection with a wind turbine 101 with an output power of 7 to 8 MW or even more than 8 MW.

Each of the upper and lower nacelle compartments 802 and 804 has compact dimensions such that it can be transported on usual public roads. The dimensions of the upper nacelle compartment 802 may have a length of less than 18 m, for example 13.5 m, a height of less than 4 m, and a width of less than 5 m, for example 4.2 m. The dimensions of the lower nacelle compartment 804 may have a length of less than 18 m, for example 13.75 m, a height of less than 4 m, and a width of less than 5 m, for example 4.2 m.

In the assembled state, i.e., when the upper nacelle compartment 802 is arranged above and fixed to the lower nacelle compartment 804, a total length 1104 of the nacelle 800 may be for example 13.75 m, and a total height 1106 of the nacelle 800 may be for example 6.5 m. A length 1108 of the top side of the nacelle 800 may be 13.5 m and a height 1110 at the front side of the nacelle 800 may be 5.4 m.

In the operational state, i.e. when the lower nacelle compartment 804 is arranged beneath the upper nacelle compartment 802, the compact length dimension of less than 18 m or even less than 14 m will have a moderate effect on a bending moment in the RESS beams 818, loads on the tower mount 816 and shifts on the center of gravity. The two sections, one in the upper nacelle compartment 802 and one in the lower nacelle compartment 804, provide plenty of space for all mechanical and electrical components. For example, the mechanical components may be essentially arranged in the upper nacelle compartment 802 and the electrical components may be essentially arranged in the lower nacelle compartment 804 such that a separation of mechanical and electrical components can be achieved.

Installation of the nacelle 800 on top of the tower 105 of the wind turbine 101 may be performed by the method steps of the method 1200 shown in FIG. 12. In step 1202, the lower nacelle compartment 804 is arranged on ground and the upper nacelle compartment 802 is positioned above the lower nacelle compartment 804. In step 1204, the lower nacelle compartment 804, which is arranged beneath the upper nacelle compartment 802, is attached to the upper nacelle compartment 802, for example by means of a corresponding fixing structure which may be arranged circumferentially at both, the upper and lower nacelle compartment 802 and 804. The thus assembled nacelle 800 is then lifted to the top of the tower 105 in step 1206. In step 1208 the tower mount 826, which is provided at the lower nacelle compartment 804, is connected to the top of the tower 105. After that, the rotor 102 may be installed at the nacelle 800.

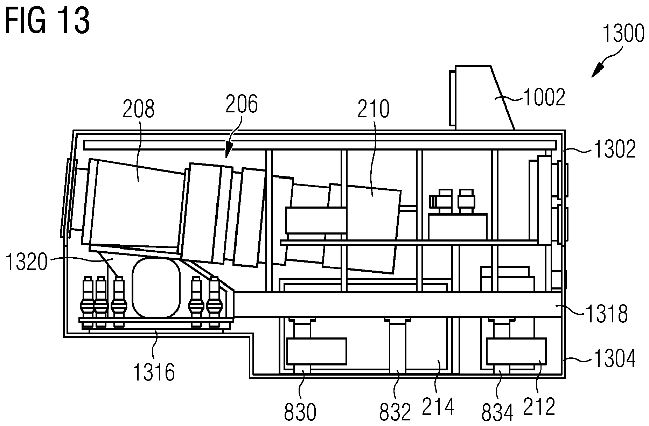

In connection with FIGs. 13 to 15, a further nacelle 1300 will be described as a third example of the nacelle 110 of FIG. 1. The nacelle 1300 comprises an upper nacelle compartment 1302 and a lower nacelle compartment 1304. As in the first example described above, the lower nacelle compartment is smaller than the upper nacelle compartment 1302 such that the lower nacelle compartment 1304 can be accommodated within the upper nacelle compartment 1302 for transportation.

However, in FIG. 13, the nacelle 1300 is illustrated in its operating state, i.e. the upper nacelle compartment 1302 is arranged above the lower nacelle compartment 1304, and the upper cell compartment 1302 is connected to the lower nacelle compartment 1304. The nacelle 1300 provides at a lower side of the lower nacelle compartment 1304 a tower mount 1316 with which the nacelle 1300 may be mounted at the top of the tower 105. In the illustrated operating state, the upper nacelle compartment 1302 accommodates a drive train 206 and further components, for example mechanical components and cooling components. The drive train 206 may comprise for example a bearing arrangement 208 and a generator 210. A bed frame 1320 is provided for coupling at least parts of the drive train 206 to the tower mount 1316. For example, the bed frame 1320 is coupled to the tower mount 1316 via bolts, and the bearing arrangement 208 is fixed at the bed frame 1320. A shaft of the rotor 102 may be supported by the bearing arrangement 208 such that a rotation of the rotor 102 is transferred to the generator 210 for generating electrical energy. Optionally, the drive train 206 may also comprise a gearbox between the bearing arrangement 208 and the generator 210. In the lower nacelle compartment 1304, a transformer 212 and a power converter 214 are accommodated.

At each side in the width direction of the lower nacelle compartment 1304, a rear end support structure beam (RESS beam) 1318 is provided in the lower nacelle compartment 1304, i.e. two RESS beams are provided. In the side view of FIG. 13, only a first one 1318 of the two RESS beams is visible and a second one of the two RESS beams is not visible. A front end of each of the RESS beams may be coupled via the bed frame 1320 to the tower mount 1316 to transfer loads and forces from the rear part of the nacelle 1300 via the RESS beams, bed frame 1320 and the tower mount 1316 to the tower 105. Along the RESS beam 1318, three support beams 830, 832 and 834 are fixed to the RESS beam 1318 and extend each downward. The support beams 830 and 832 are coupled to the power converter 214, and the support beam 834 is coupled to the transformer 212. At the not visible second RESS beam corresponding support beams may be provided for coupling to the power converter 214 and the transformer 212 at the opposite sides. At the tower mount 1316, the bed frame 1320 is fixed with a plurality of bolts and the bearing arrangement 208 of the drive train 206 is mounted at the bed frame 1320.

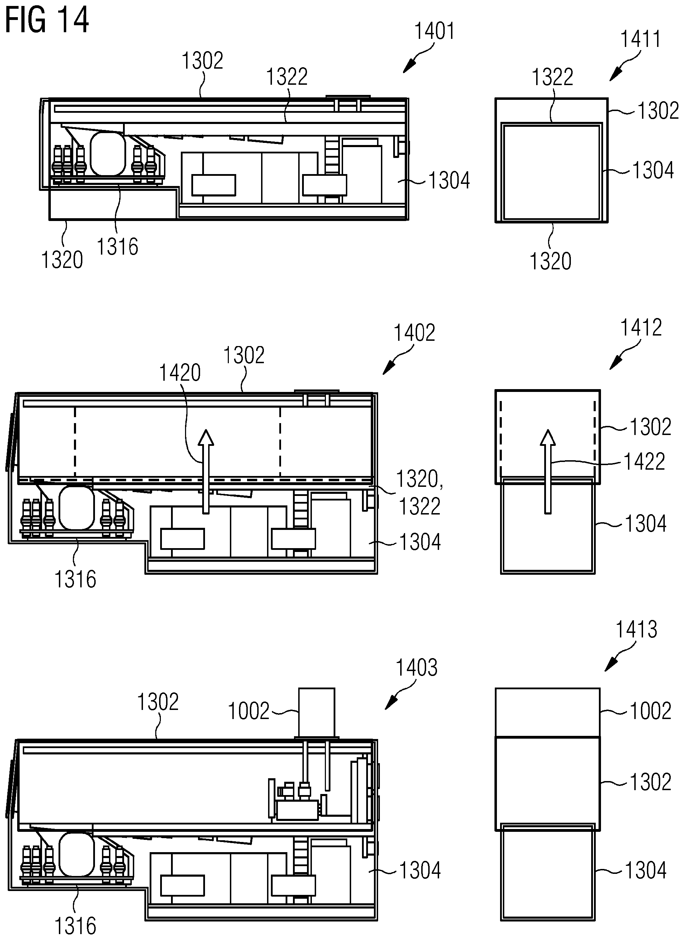

For reducing the height of the nacelle 1300 during transportation, the lower nacelle compartment 1304 may be arranged with in the upper nacelle compartment 1302. Therefore, during transportation, the drive train 206 and further mechanical components within the upper nacelle compartment 1302 may not be installed. Likewise, the cooling system including the cooling unit 1002 on the top side of the upper nacelle compartment 1302 may not be installed during transportation. For example, a length of the upper nacelle compartment 1302 may be less than 14 m, for example 13.75 m, and a width of the upper nacelle compartment 1302 may be 4.25 m. The length and width of the lower nacelle compartment 1304 may be smaller, for example the lower nacelle compartment 1304 may have a length of 13.5 m and a width of 4 m. Thus, the lower nacelle compartment 1304 may be placed within the upper nacelle compartment 1302 for transportation as illustrated in the upper section of FIG. 14 in a side view and front view. The arrangement of the lower nacelle compartment 1304 within the upper nacelle compartment 1302 will be called in the following the transportation state of the nacelle 1300.

FIG. 14 illustrates a transition of the nacelle 1300 from the transportation state to the operational state. FIG. 14 shows on the left-hand side three schematic sectional side views 1401-1403 of the nacelle 1300, and on the right-hand side three schematic sectional front views 1411-1413 of the nacelle 1300. In the sectional views 1401, 1411, the nacelle 1300 is in the transportation state, i.e. the lower nacelle compartment 1304 is placed within the upper nacelle compartment 1302. At the construction site of the wind turbine 101, the nacelle 1300 may be placed on the ground and the upper nacelle compartment 1302 may be lifted as indicated by arrows 1420 and 1422 in views 1402 and 1412, while the lower nacelle compartment 1304 remains on the ground. The upper nacelle compartment 1302 provides at its lower side a first circumferential connection structure 1320, and the lower nacelle compartment 1304 provides at its upper side a second circumferential connection structure 1322 which matches to the first circumferential connection structure 1320. After lifting the upper nacelle compartment 1302, the upper nacelle compartment 1302 and the lower nacelle compartment 1304 are connected by means of the first and second circumferential connection structures 1320 and 1322. Further components may be installed as indicated in views 1403 and 1413, for example the cooling unit 1002 and corresponding cooling components may be installed in and at the nacelle 1300.

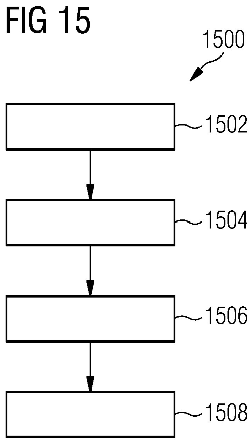

FIG. 15 shows method steps of a method 1500 which summarize the installation of the nacelle 1300. After transportation, the nacelle 1300 is provided in the transportation state, i.e. the lower nacelle compartment 1304 is arranged within the upper nacelle compartment 1302. For example after the nacelle 1300 has been moved from the transport vehicle to ground or while the nacelle 1300 is still on the transport vehicle, the upper nacelle compartment 1302 is raised to a position above the lower nacelle compartment 1304 in step 1502. In step 1504 the lower nacelle compartment 1304 is attached to the upper nacelle compartment 1302, for example by means of the first and second circumferential connection structures 1320, 1322. Further mechanical and electrical components may be installed, for example the cooling unit 1002. Next, the nacelle 1300 is lifted to the top of the tower 105 of the wind turbine 101 in step 1506, and the tower mounted 1316 is connected to the top of the tower 105 in step 1508. Further mechanical and electrical components may be installed while the nacelle 1300 is on top of the tower 105, for example the drive train 206 and the rotor 102.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

## Claims

1. A nacelle for a wind turbine, comprising:
- an upper nacelle compartment (202, 802, 1302), and
- a lower nacelle compartment (204, 804, 1304),
wherein, in an operational state of the wind turbine (101), the lower nacelle compartment (204, 804, 1304) is attached beneath the upper nacelle compartment (202, 802, 1302) to the upper nacelle compartment (202, 802, 1302),
wherein the upper nacelle compartment (202, 802, 1302) is dimensioned to accommodate at least a bearing arrangement (208) for supporting a shaft of a rotor (102) of the wind turbine (101) and an electrical generator (210), and
wherein the lower nacelle compartment (204, 804, 1304) is dimensioned to accommodate at least a transformer (212) and a power converter (214).

2. The nacelle of claim 1, wherein the lower nacelle compartment (204, 804, 1304) is configured to
accommodate the transformer (212) in a position between a tower mount (216, 826, 1316) of the nacelle (200, 800, 1300) and the power converter (214), or
accommodate the power converter (214) in a position between the tower mount (216, 826, 1316) of the nacelle (200, 800, 1300) and the transformer (212).

3. The nacelle of claim 2, further comprising the transformer (212) and the power converter (214), both being arranged within the lower nacelle compartment (204, 804, 1304).

4. The nacelle of any one of the preceding claims,
wherein a length of the nacelle (200, 800, 1300) is less than 14m.

5. The nacelle of any one of the preceding claims,
wherein a width of the lower nacelle compartment (204, 1304) is smaller than a width of the upper nacelle compartment (202, 1302) and a length of the lower nacelle compartment (204, 1304) is smaller than a length of the upper nacelle compartment (202, 1302) such that the lower nacelle compartment (204, 1304) can be arranged at least partially within the upper nacelle compartment (202, 1302).

6. The nacelle of claim 5,
wherein a tower mount (216) is provided at a front end of the upper nacelle compartment (202),
wherein a length of the lower nacelle compartment (204) is shorter than distance between the tower mount (216) and a rear end of upper nacelle compartment (202).

7. The nacelle of claim 6, further comprising:
- a rear end support structure beam (218) extending within the upper nacelle compartment (202) from the tower mount (216) to a rear end of the upper nacelle compartment (202), wherein, in the operational state of the wind turbine (101), the lower nacelle compartment (204) is attached beneath the rear end support structure beam (218) to the rear end support structure beam (218).

8. The nacelle of claim 5,
wherein a tower mount (1316) is provided at a front end of the lower nacelle compartment (1304).

9. The nacelle of claim 8,
wherein the upper nacelle compartment (1302) provides at its lower side a first circumferential connection structure (1320), and the lower nacelle compartment (1304) provides at its upper side a second circumferential connection structure (1322) matching the first circumferential connection structure (1320).

10. The nacelle of any one of claims 1-4,
wherein a width of the lower nacelle compartment (804) is equal to a width of the upper nacelle compartment (802) and a length of the lower nacelle compartment (804) is equal to a length of the upper nacelle compartment (802).

11. The nacelle of claim 10,
wherein a tower mount (826) is provided at a front end of the lower nacelle compartment (804).

12. The nacelle of claim 11, further comprising:
- a rear end support structure beam (818) extending within the lower nacelle compartment (804) from the tower mount (826) to a rear end of the lower nacelle compartment (804), and
- at least one support beam (830-834) connected to the rear end support structure beam (818) and extending, in the operational state of the wind turbine (101), from the rear end support structure beam (818) downwards, wherein the at least one support beam (830-834) is configured to support at least one of the transformer (212) and the power converter (214) .

13. A method of installing the nacelle (200) of clam 6 at a top of a tower (105) of the wind turbine (101), the method (700) comprising:
- lifting (702) the nacelle (200) to the top of the tower (105) of the wind turbine (101) with the lower nacelle compartment (204) being arranged within the upper nacelle compartment (202),
- connecting (704) the tower mount (216) at the front end of the upper nacelle compartment (202) to the top of the tower (105),
- lowering (706) the lower nacelle compartment (204) to a position beneath the upper nacelle compartment (202), and
- attaching (708) the lower nacelle compartment (204) beneath the upper nacelle compartment (202) to the upper nacelle compartment (202).

14. A method of installing the nacelle (1300) of clam 8 at a top of a tower (105) of the wind turbine (101), the method (1500) comprising:
- raising (1502), at the ground and from an arrangement in which the lower nacelle compartment (1304) is within the upper nacelle compartment (1302), the upper nacelle compartment (1302) to a position above the lower nacelle compartment (1304) ,
- attaching (1504) the lower nacelle compartment (1304) beneath the upper nacelle compartment (1302) to the upper nacelle compartment (1302),
- lifting (1506) the nacelle (1300) to the top of the tower (105) of the wind turbine (101), and
- connecting (1508) the tower mount (1316) at the lower nacelle compartment (1304) to the top of the tower (105).

15. A method of installing the nacelle (800) of clam 11 at a top of a tower (105) of the wind turbine (101), the method (1200) comprising:
- positioning (1202), at the ground, the upper nacelle compartment (802) in a position above the lower nacelle compartment (804),
- attaching (1204) the lower nacelle compartment (804) beneath the upper nacelle compartment (802) to the upper nacelle compartment (802),
- lifting (1206) the nacelle (800) to the top of the tower (105) of the wind turbine (101), and
- connecting (1208) the tower mount (826) at the lower nacelle compartment (804) to the top of the tower (105).
